Europäisches Patentamt

European Patent Office

Office européen des brevets

(11) Veröffentlichungsnummer: **0 453 886 B1**

(12) # EUROPÄISCHE PATENTSCHRIFT

(45) Veröffentlichungstag der Patentschrift: **29.03.95**

(51) Int. Cl.6: **C04B 33/16**, C04B 33/32, C03B 18/16

(21) Anmeldenummer: **91105751.1**

(22) Anmeldetag: **11.04.91**

---

(54) **Schamottestein für den Einsatz als Zinnbad-Bodenstein.**

---

(30) Priorität: **26.04.90 DE 4013294**

(43) Veröffentlichungstag der Anmeldung:
**30.10.91 Patentblatt 91/44**

(45) Bekanntmachung des Hinweises auf die
Patenterteilung:
**29.03.95 Patentblatt 95/13**

(84) Benannte Vertragsstaaten:
**AT BE DE ES FR GB IT LU**

(56) Entgegenhaltungen:
DE-A- 1 807 731
FR-A- 2 190 761

WORLD PATENT INDEX, Woche 04, Accession Nr. 80-07094, Derwent Publications Ltd, Londen, GB; & SU-A-662 528

WORLD PATENT INDEX LATEST, Woche 50, Accession Nr. 84-311604, Derwent Publications Ltd, London, GB; & SU-A-1 090 678

(73) Patentinhaber: **DIDIER-WERKE AG**
**Lessingstrasse 16-18**
**D-65189 Wiesbaden (DE)**

(72) Erfinder: **Weichert, Thomas, Dr.**
**Am Sportplatz 1**
**W-6209 Hohenstein 2 (DE)**
Erfinder: **Leupold, Hermann**
**Erikaweg 28**
**W-6229 Walluf (DE)**
Erfinder: **Hoffmann, Joh.-Werner**
**Landrat-Joststrasse 12**
**W-5414 Niederwerth (DE)**

(74) Vertreter: **Brückner, Raimund, Dipl.-Ing.**
**c/o Didier-Werke AG**
**Lessingstrasse 16-18**
**D-65189 Wiesbaden (DE)**

---

EP 0 453 886 B1

**Beschreibung**

Das Patent betrifft einen Schamottestein mit 33 bis 43 Gew.-% $Al_2O_3$ und 1 bis 3 Gew.-% Alkalioxid für den Einsatz als großformatiger Zinnbad-Bodenstein bei Öfen zur Herstellung von Flachglas nach dem Floatverfahren und ein Verfahren zur Herstellung des Schamottesteins.

Bei Öfen zur Herstellung von Flachglas nach dem Floatverfahren werden für die Aufnahme des Zinnbades großformatige feuerfeste Steine verwendet, die als Zinnbad-Bodensteine bezeichnet werden. Die Steine auf der Basis von tonerdesilikatischer Schamotte sollen gegenüber der korrosiven Beanspruchung durch Alkalien und gegenüber der mechanischen Beanspruchung durch thermische Spannungen beständig sein. Durch den Alkaliangriff kommt es bei Schamottesteinen unter Volumenzunahme zur Bildung von Feldspatvertretern und zum Verschleiß durch Abschalungen. Zur Verminderung des Alkaliangriffs wurde bereits die Bedeutung der Gasdurchlässigkeit des feuerfesten Steins erkannt und eine möglichst geringe Permeabilität des feuerfesten Steins gefordert (Leupold u.a. Improvement of Resistance to Alkali Attack..., November 1984). Gegenüber der mechanischen Beanspruchung bei feuerfesten Steinen ist es wesentlich, daß sie außer Festigkeit und Heißfestigkeit auch elastische Eigenschaften bzw. eine gewisse Verformbarkeit besitzen. Diese mechanischen Eigenschaften hängen insbesondere von der Art der Bindung, Versinterung und dem Gefüge des feuerfesten Steins ab.

Feuerfeste Schamottesteinen werden aus gebrannter Schamotte und feuerfestem Ton als Bindemittel sowie unter Verwendung von Anmachflüssigkeit durch Pressen oder Stampfen geformt und allgemein bei Temperaturen zwischen 1250 und 1550 °C gebrannt. Der Alkaligehalt kann allgemein 1 bis 3 Gew.-% betragen. Nach dem Brand weisen die Schamottesteine Mullit, Cristobalit und Glasphase auf (Salmang, Scholze: Die Keramik, 1968, Seite 341, Absatz 2 bis 4). Bei feuerfesten Schamottesteinen, die im Kontakt mit Glasschmelze stehen, den sogenannten Glaswannensteinen ist es bekannt, daß deren Haltbarkeit von ihrer Druckfeuerbeständigkeit, dem Alkaligehalt, der Porosität und Gasdurchlässigkeit abhängig ist (Harders Kienow, Feuerfestkunde 1960, Seite 568 und Tabelle 108). Danach sind aber Angaben für einen großformatigen Zinnbadbodenstein (Abmessungen von etwa 300 x 600 x 900 mm und einem Gewicht von über 200 kg) mit verbesserten Eigenschaften und das Verfahren zu seiner Herstellung nicht zu erhalten.

Die Aufgabe nach der Erfindung besteht in einem Schamottestein der eingangs genannten Art, der verbesserte Eigenschaften mit Bezug auf die Alkalibeständigkeit, Gasdurchlässigkeit und mechanische Beständigkeit aufweist. Es wurde gefunden, daß ein Schamottestein bei ausreichender Festigkeit und Druckfeuerbeständigkeit, verbunden mit einem relativ niedrigen Druck-Elastizitätsmodul und geringer Gasdurchlässigkeit in besonderer Weise für den Einsatz als großformatiger Zinnbadbodenstein geeignet ist.

Die Erfindung besteht in einem Schamottestein der eingangs genannten Art, der dadurch gekennzeichnet ist, daß der Stein eine offene Porosität von 16 bis 20 Vol.-%, eine Druckfestigkeit von 35 bis 60 N/mm², einen Druck-Elastizitätsmodul von 3000 bis 10000 N/mm², eine Druckfeuerbeständigkeit, ta-Wert von 1300 bis 1450 °C und eine maximale Gasdurchlässigkeit von 4 Nanoperm aufweist. Der Schamottestein kann vorzugsweise 37 bis 40 Gew.-% $Al_2O_3$ aufweisen. Der Alkaligehalt des Schamottesteins kann ferner vorzugsweise 1 bis 2 oder 1,2 bis 1,8 Gew.-% betragen.

Das Verfahren zur Herstellung des Schamottesteins nach der Erfindung zeichnet sich dadurch aus, daß eine Mischung aus: Schamotte in der Körnung bis 6 mm, feinteiligem feuerfesten Ton in der Körnung unter 0,09 mm, einem alkalireichen Silikatmaterial mit über 3 Gew.-% Alkalioxid in der Körnung unter 0,09 mm in einer Menge entsprechend einem Anteil von mindestens 0,3 Gew.-% Alkalioxid, bezogen auf den Schamottestein, und einem temporären Bindemittel zu Steinen geformt, getrocknet und gebrannt wird.

Bei dem Verfahren besteht das alkalireiche Silikatmaterial insbesondere aus Porzellanscherben, Feldspäten, Feldspatvertretern, Feldspat- und Feldspatvertreter führenden Gesteinen, wie Nephelinsyenit und Phonolith.

Die Mischung zur Herstellung des Schamottesteins kann den feinteiligen feuerfesten Ton mit 12 bis 20 Gew.-% enthalten. Hierdurch wird in vorteilhafter Weise die Verarbeitung der Masse durch Pressen oder Stampfen und in Verbindung mit dem alkalireichen Silikatmaterial ein gebrannter Schamottestein mit einer hohen Druckelastizität bzw. Druckverformbarkeit, ausgedrückt durch den Wert des Druck-Elastizitätsmoduls, und eine niedrige Gasdurchlässigkeit bei sonst normaler Höhe der offenen Porosität erreicht.

Bei der Verwendung von Porzellanbruch als alkalireiches Silikatmaterial werden 10 bis 20 Gew.-% feinkörnige Porzellanscherben und 30 bis 37 Gew.-% feuerfester Ton und Porzellanscherben in der Mischung vorgesehen. Mit Nephelinsyenit als alkalireiches Silikatmaterial kann der Anteil 1,7 bis 6 Gew.-% in der Mischung betragen, wodurch eine Zunahme des Alkalianteils, bezogen auf den Schamottestein, um 0,3 bis 1,0 Gew.-% verbunden ist.

In besonders vorteilhafter Ausgestaltung kann bei dem Verfahren zur Herstellung des Schamottesteins in der Mischung die Schamotte in der Körnung über 0,5 mm mit 0,2 bis 1,5 Gew.-% Alkaligehalt eingesetzt werden.

Das Brennen der geformten und getrockneten Schamottesteine wird vorzugsweise bei Temperaturen von 1150 - 1300 °C vorgenommen.

Für die Herstellung der Mischung werden als Schamotte gebrannte Tonerdesilikate eingesetzt. In der Tabelle 1 sind geeignete Schamotte-Materialien mit Angaben zur chemischen Zusammensetzung enthalten.

Die Schamotte wird in bekannter Weise mit beispielsweise folgender Kornverteilung in der Mischung verwendet:

| Schamotte | Kornverteilung | Gew.-% |
|-----------|----------------|--------|
| | 3 – 6 mm | 15 |
| | 1 – 3 mm | 40 |
| | 0,5 – 1 mm | 18 |
| | 0,09 – 0,5 mm | 21 |
| | – 0,09 mm | 6 |

Die feuerfesten Tone haben üblicherweise einen Alkalioxidgehalt bis maximal etwa 2,5 Gew.-%. Für das Verfahren nach der Erfindung werden geeignete feuerfeste Tone sowie Bruch aus Porzellan und Nephelinsyenit als alkalireiches Silikatmaterial in der Tabelle 1 mit Angaben zur chemischen Zusammensetzung genannt. Der Bruch aus Porzellan hat nach Tabelle 1 einen Gehalt von 3,01 Gew.-% Alkalioxid. Danach ist die Verwendung von mindestens 10 Gew.-% Bruch aus Porzellan in der Mischung erforderlich. Das Material Nephelinsyenit mit 16,9 Gew.-% Alkalioxid ist entsprechend mit mindestens 1,8 Gew.-% in der Mischung einzusetzen. Das feuerfeste Tonmaterial wird getrocknet, gemahlen und in der Körnung unter 0,09 mm in der Mischung eingesetzt. Die alkalireichen Silikatmaterialien haben die Körnung unter 0,09 mm und vorzugsweise unter 0,044 mm, wobei sie eine spezifische Kornoberfläche im Bereich von 2500 bis 5000 cm$^2$/g nach Blaine aufweisen.

Die aus den keramischen Materialien unter Zusatz eines üblichen organischen Bindemittels wie Sulfitablauge oder Methylcellulose und Wasser hergestellte Mischung wird durch Pressen, Stampfen, Pressen mit zusätzlicher Vibration und Rüttel- oder Stoßverdichtung mit zusätzlicher Auflast zu Steinkörpern mit Abmessungen von etwa 300 x 600 x 900 mm geformt. Die Formgebung muß bis zu einer ausreichend hohen Dichte, entsprechend einem Preßdruck von mindestens 50 N/mm$^2$ durchgeführt werden, ohne daß durch die Anwendung einer zu hohen Verdichtung der Mischung die Gefahr der Ausbildung von Lagen und Rissen in dem Steinkörper entsteht.

Der Schamottestein nach der Erfindung und das Verfahren zu seiner Herstellung wird durch die folgenden Beispiele 1 bis 5 und das Vergleichsbeispiel 6 nach Tabelle 2 erläutert. Bei den Eigenschaften der gebrannten Steine kommt der Gasdurchlässigkeit (GD) und dem Druck-E-Modul eine besondere Bedeutung zu, da nach der Erfindung diese Eigenschaften in Verbindung zur Alkalibeständigkeit und mechanischen Beständigkeit und insgesamt zur verbesserten Haltbarkeit der Zinnbadbodensteine stehen.

Die Gasdurchlässigkeit wird nach DIN 51058 ermittelt. Zur Ermittlung des Druck-E-Moduls wird in bekannter Weise an einem zylindrischen Prüfkörper während der Druckfestigkeitsprüfung die Kraft und Zusammendrückung aufgenommen. In dem Diagramm Druckspannung und Zusammendrückung bzw. Höhenänderung wird für den Probekörper eine Kurve erhalten. Der mittlere lineare Abschnitt der Kurve dient zur Angabe des Druck-E-Moduls (Anlegen der Tangente an die Kurve). Der Begriff Druck-E-Modul beschreibt im vorliegenden Fall das Verhalten des Schamottesteins unter Druckspannung, wobei eine reversible, elastische Verformung und ein geringer Anteil an nicht reversibler, bleibender Verformung auftritt.

Die Schamottesteine nach den Beispielen 1 bis 5 erreichen nach einem Brand bei relativ niedrigen Temperaturen und bei einem Alkalioxidgehalt von über 1 % eine niedrige Gasdurchlässigkeit und hohe Druckelastizität (Druck-E-Modul zwischen 3000 und 10000 N/mm$^2$) bei sonst vorteilhaften Eigenschaften. Der Schamottestein nach dem Vergleichsbeispiel 6 ohne den Anteil von alkalischem Silikatmaterial erreicht bei sonst weitgehend gleichartigen Eigenschaften und ebenfalls einem Alkalioxidgehalt von über 1 % nicht die gewünschte geringe Gasdurchlässigkeit.

TABELLE 1

| | SiO$_2$ | Al$_2$O$_3$ | TiO$_2$ | Fe$_2$O$_3$ | K$_2$O | Na$_2$O | Porosität |
|---|---|---|---|---|---|---|---|
| Schamotte | 51,5 | 45,6 | 1,7 | 0,9 | 0,1 | 0,1 | 6,5 |
| Schamotte, alkalireich | 58,0 | 33,5 | 2,7 | 2,7 | 1,5 | 0,2 | 6,7 |
| Ton 1 | 56,0 | 36,0 | 1,7 | 2,1 | 2,0 | 0,2 | |
| Ton 2 | 65,5 | 28,5 | 1,5 | 1,0 | 2,4 | 0,3 | |
| Bruch Porzellan | 68,6 | 25,9 | 0,2 | 0,7 | 0,8 | 2,2 | |
| Nephelinsyenit | 57,0 | 23,8 | | 0,1 | 9,1 | 7,8 | |

Angaben in Gewichts-Prozent (Gew.-%), Porosität in Vol.-%.

TABELLE 2

| Beispiele | 1 | 2 | 3 | 4 | 5 | 6 |
|---|---|---|---|---|---|---|
| Schamotte | 64 | 74 | 48 | 41 | 70 | 50 |
| Schamotte,alkalireich | | 4 | 22 | 28 | | 31 |
| Bruch Porzellan | 20 | | 12 | 15,5 | 15,5 | |
| Nephelinsyenit | | 6 | | | 2 | |
| Ton 1 | 13 | 3 | 9 | 12,5 | 6,5 | 9 |
| Ton 2 | 3 | 13 | 9 | 3 | 6 | 10 |
| | | | | | | |
| Körnung | | | | | | |
| (Schlämmanalyse) | | | | | | |
| + 1 mm | 32,5 | 34,4 | 34,0 | 33,0 | 32,0 | 34,0 |
| - 0,09 mm | 36,0 | 32,8 | 33,0 | 34,0 | 36,0 | 38,0 |
| Rohdichte, frisch $g/cm^3$ | 2,36 | 2,34 | 2,34 | 2,34 | 2,38 | 2,35 |
| Brand °C | 1220 | 1280 | 1250 | 1170 | 1260 | 1280 |
| | | | | | | |
| Rohdichte $g/cm^3$ | 2,17 | 2,19 | 2,18 | 2,17 | 2,23 | 2,18 |
| Porosität,offene (Vol.%) | 19,5 | 18 | 18 | 18 | 16,5 | 19 |
| GD (Nanoperm) | 3 | 4 | 3 | 3 | 2 | 9 |
| KDF ($N/mm^2$) | 35 | 40 | 35 | 40 | 60 | 35 |
| Druck-E-Modul $N/mm^2$ | 4000 | 9000 | | 5000 | | |
| DFB ta °C DIN 51053 | 1400 | | | 1350 | | |
| | | | | | | |
| Mullit % | | 41 | | | 42 | 43 |
| Cristobalit % | | 18 | | | 19 | 15 |
| | | | | | | |
| $SiO_2$ % | 54,8 | 54 | 57 | 56 | 55 | 55,3 |
| $Al_2O_3$ % | 40,6 | 41,2 | 38 | 39 | 40 | 39,3 |
| $Fe_2O_3$ % | 1,2 | | 1,4 | 1,4 | | |
| $Na_2O$ % | 0,2 | 0,4 | 0,1 | 0,2 | 0,3 | 0,1 |
| $K_2O$ % | 0,8 | 1,1 | 1,2 | 1,2 | 1,1 | 1,0 |

EP 0 453 886 B1

TABELLE 3

| Beispiel | 7 (von Beispiel 5) | | |
|---|---|---|---|
| Rohdichte, frisch g/cm$^3$ | 2,43 | 2,43 | 2,43 |
| Brand °C | 1200 | 1300 | 1360 |
| Rohdichte g/cm$^3$ | 2,28 | 2,30 | 2,31 |
| Porosität, offene (Vol.-%) | 15 | 14 | 12 |
| GD (Nanoperm) | 2 | 2 | 5 |
| KDF (N/mm$^2$) | 65 | 63 | 64 |
| Druck-E-Modul N/mm$^2$ | 7000 | 10000 | 13000 |
| Mullit % | 42 | 46 | 50 |
| Cristobalit % | 19 | 16 | 10 |

Die Eigenschaften der Schamottesteine hängen auch von der Brenntemperatur ab. Dies zeigt das Beispiel 7 nach Tabelle 3, das von der Mischung nach Beispiel 5 ausgeht. Aus der Mischung wurden Steine im Format 300 x 300 x 76 mm mit einer hydraulischen Presse bei einem Preßdruck von 50 N/mm$^2$ hergestellt. Die Steine hatten ein Raumgewicht, frisch, vor dem Brennen von 2,43 g/cm$^3$. Der Brand bei 1200°C führte zu den vorteilhaften Eigenschaften der Gasdurchlässigkeit und der Druckelastizität nach der Erfindung. Mit den Brenntemperaturen 1300 und 1360°C wurden Steine mit höherer Rohdichte nach dem Brand, geringerer offener Porosität, steigendem Gehalt an Mullit und abnehmendem Gehalt an Cristobalit erhalten, jedoch fand gleichzeitig mit der höheren Brenntemperatur eine Verschlechterung bei den als wesentlich erkannten Eigenschaften Gasdurchlässigkeit und Elastizitätsmodul statt.

**Patentansprüche**

1. Schamottestein mit 33 bis 43 Gew.-% $Al_2O_3$ und 1 bis 3 Gew.-% Alkalioxid für den Einsatz als großformatiger Zinnbad-Bodenstein bei Öfen zur Herstellung von Flachglas nach dem Floatverfahren,
dadurch gekennzeichnet,
daß der Stein eine offene Porosität von 16 bis 20 Vol.-%, eine Druckfestigkeit von 35 bis 60 N/mm$^2$, einen Druck-Elastizitätsmodul von 3000 bis 10000 N/mm$^2$, eine Druckfeuerbeständigkeit ta-Wert von 1300 bis 1450 °C und eine maximale Gasdurchlässigkeit von 4 Nanoperm aufweist.

2. Verfahren zur Herstellung des Schamottesteins nach Anspruch 1,
dadurch gekennzeichnet,
daß eine Mischung aus:
Schamotte in der Körnung bis 6 mm,
feinteiligem feuerfesten Ton in der Körnung unter 0,09 mm, einem alkalireichen Silikatmaterial mit über 3 Gew.-% Alkalioxid in der Körnung unter 0,09 mm in einer Menge entsprechend einem Anteil von mindestens 0,3 Gew.-% Alkalioxid, bezogen auf den Schamottestein, und einem temporären Bindemittel zu Steinen geformt, getrocknet und gebrannt wird.

3. Verfahren nach Anspruch 2,
dadurch gekennzeichnet,
daß das alkalireiche Silikatmaterial aus Porzellanscherben, Feldspäten, Feldspatvertretern, Feldspat- und Feldspatvertreter führenden Gesteinen, wie Nephelinsyenit und Phonolith, besteht.

4. Verfahren nach Anspruch 2,
dadurch gekennzeichnet,
daß in der Mischung der feinteilige Ton mit 12 bis 20 Gew.-% enthalten ist.

6

**5.** Verfahren nach den Ansprüchen 2 bis 4,
dadurch gekennzeichnet,
daß in der Mischung als alkalireiches Silikatmaterial Porzellanscherben mit 10 bis 20 Gew.-% enthalten ist, wobei feuerfester Ton und Porzellanscherben mit 30 bis 37 Gew.-% enthalten sind, bezogen auf die trockenen Bestandteile der Mischung.

**6.** Verfahren nach den Ansprüchen 2 bis 4,
dadurch gekennzeichnet,
daß in der Mischung als alkalireiches Silikatmaterial Nephelinsyenit mit 1,7 bis 6 Gew.-% enthalten ist.

**7.** Verfahren nach den Ansprüchen 2 bis 6,
dadurch gekennzeichnet,
daß in der Mischung die Schamotte in der Körnung über 0,5 mm mit 0,2 bis 1,5 Gew.-% Alkaligehalt eingesetzt wird.

**8.** Verfahren nach den vorhergehenden Ansprüchen,
dadurch gekennzeichnet,
daß die Steine bei Temperaturen von 1150 - 1300 °C gebrannt werden.

## Claims

**1.** Fireclay brick with 33 to 43 wt. % $Al_2O_3$ and 1 to 3 wt. % alkali oxide for use as a large sized tinbath bottom block in furnaces for manufacturing plate glass by the float method, characterised in that the brick has an open porosity of 16 to 20 vol.%, a compressive strength of 35 to 60 $N/mm^2$, a compressive modulus of elasticity of 3000 to 10000 $N/mm^2$, a refractoriness under load ta value of 1300 to 1450 °C and a maximum gas permeability of 4 nanoperms.

**2.** Method of manufacturing the fireclay brick as claimed in Claim 1, characterised in that a mixture comprising: fireclay of a grain size up to 6 mm, finely divided refractory clay in a grain size of less that 0.09 mm, an alkali-rich silicate material with above 3 wt.% alkali oxide in a grain size of less than 0.09 mm in an amount corresponding to a content of at least 0.3 wt.% alkali oxide, with respect to the fireclay brick, and a temporary bonding agent is shaped into bricks, dried and fired.

**3.** Method as claimed in Claim 2, characterised in that the alkali-richt silicate material comprises porcelain fragments, feldspars, feldspar substitutes, rocks, such as nepheline syenite and phonolite, containing feldspar and feldspar substitutes.

**4.** Method as claimed in Claim 2, characterised in that a finely divided clay is containted in the mixture in an amount of 12 to 20 wt.%.

**5.** Method as claimed in Claims 2 to 4, characterised in that porcelain fragments are contained in the mixture as the alkali-rich silicate material in an amount of 10 to 20 wt.%, whereby refractory clay and porcelain fragments are included in an amount of 30 to 37 wt.%, with respect to the dry components of the mixture.

**6.** Method as claimed in Claims 2 to 4, characterised in that nepheline syenite is contained in the mixture as the alkali-rich silicate material in an amount of 1.7 to 6 wt.%.

**7.** Method as claimed in Claims 2 to 6, characterised in that the fireclay is used in the mixture in a grain size above 0,5 mm with 0,2 to 1,5 wt.% alkali content.

**8.** Method as claimed in the preceding Claims, characterised in that the bricks are fired at temperatures of 1150 to 1300 °C.

## Revendications

**1.** Bloc de chamotte contenant de 33 à 43 % en poids d'$Al_2O_3$ et de 1 à 3 % en poids d'oxydes de métaux alcalins, destiné à être utilisé comme plaque de fond de bain d'étain de grand format dans des fours servant à la production de verre plat flotté, caractérisé en ce que ledit bloc présente une porosité de cellules ouvertes de 16 à 20 % en volume, une résistance à la compression de 35 à 60 N/mm$^2$, un module d'élasticité en compression de 3000 à 10000 N/mm$^2$, une température "ta" de résistance à l'affaissement sous charge à haute température valant de 1300 °C à 1450 °C, et une perméabilité maximale aux gaz de 4 nanoperms.

2. Procédé de fabrication d'un bloc de chamotte conforme à la revendication 1, caractérisé en ce que l'on moule en un bloc un mélange constitué d'une chamotte dont les particules ont une taille d'au plus 6 mm, d'une argile réfractaire finement divisée dont les particules ont une taille inférieure à 0,09 mm, d'une matière à base de silicates et riche en éléments alcalins, dont les particules ont une taille inférieure à 0,09 mm, qui contient plus de 3 % en poids d'oxydes de métaux alcalins et qui se trouve en une quantité correspondant à une proportion d'oxydes de métaux alcalins, rapportée au bloc de chamotte, d'au moins 0,3 % en poids, et d'un liant temporaire, on fait sécher le bloc obtenu et on le cuit.

3. Procédé conforme à la revendication 2, caractérisé en ce que la matière à base de silicates et riche en éléments alcalins est constituée par des débris de porcelaine, des feldspaths, des substituts de feldspath, ou des roches qui sont des précurseurs de feldspaths ou de substituts de feldspath, comme de la syénite à néphéline ou de la phonolite.

4. Procédé conforme à la revendication 2, caractérisé en ce que ledit mélange contient de 12 à 20 % en poids d'argile finement divisée.

5. Procédé conforme à l'une des revendications 2 à 4, caractérisé en ce que ledit mélange contient, en tant que matière à base de silicates et riche en éléments alcalins, de 10 à 20 % en poids de débris débris de porcelaine, rapportées aux constituants secs du mélange, valant de 30 à 37 % en poids.

6. Procédé conforme à l'une des revendications 2 à 4, caractérisé en ce que ledit mélange contient, en tant que matière à base de silicates et riche en éléments alcalins, de 1,7 à 6 % en poids de syénite à néphéline.

7. Procédé conforme à l'une des revendications 2 à 6, caractérisé en ce que l'on met, dans ledit mélange, de la chamotte qui contient de 0,2 à 1,5 % en poids d'éléments alcalins et dont les particules ont une taille supérieure à 0,5 mm.

8. Procédé conforme à l'une des revendications précédentes, caractérisé en ce que l'on cuit le bloc à une température valant de 1150 °C à 1300 °C.